# EUROPEAN PATENT APPLICATION

(11) **EP 1 818 208 A1**
(43) Date of publication of application: **15.08.2007**
(21) Application number: 06101418.9
(22) Date of filing: 08.02.2006
(51) Int. Cl.: B60N 2/00, B60R 21/015

(54) **Vehicule seat with pressure activatable sensor**

(71) Applicant: IEE INTERNATIONAL ELECTRONICS & ENGINEERING S.A., 6468 Echternach (LU)
(72) Inventor: Ben Hsain, Abdellatif, 6136 Junglinster (LU); Backendorf, Serge, 4991 Sanem (LU); Divo, Jean-Philippe, 57970 Yutz (FR)
(74) Representative: Beissel, Jean

(57) **Abstract**

A pressure-activatable sensor, such as e.g. a foil-type pressure sensor, is arranged in a seating portion for a vehicle seat; the pressure-activatable sensor includes a sensing region for sensing the presence of an occupant seated on the seating portion. The pressure-activatable sensor is arranged in the seating portion in such a way that the sensing region is located substantially on one side with respect to a virtual plane dividing the seating portion into a left and a right half.

## Description

### Technical field

The present invention generally relates to detecting occupancy of a vehicle seat and in particular to an arrangement with a pressure-activatable sensor in the seating portion of a vehicle seat.

### Background Art

Seat occupancy sensors are commonly used in automotive vehicles for purposes of airbag control or other applications. In general, seat occupancy sensors present a plurality of switching elements, arranged in an array configuration and distributed over the surface of the vehicle seat. The individual switching elements are typically configured as simple on/off switches or as pressure sensing elements, e.g. force sensing resistors, in which, above a certain threshold force, an electrical resistance continuously varies with the force acting on the seat.

In case of airbag control, the seat occupancy sensors are used for determining the occupancy state of a vehicle seat and the airbag allocated to a given seat is only activated if the current occupancy state of the seat requires such activation.

In a different application, the seat occupancy status determined by the seat occupancy sensor is used in a seat belt warning system for generating a warning signal if a specific vehicle seat is occupied and the corresponding seat belt is not fastened. For this seat belt reminder function, an exact assessment of seat occupancy (e.g. passenger classification) is not essential. For such applications it is desirable to provide a less costly, yet reliable occupancy sensor. A seat belt reminder system (SBR) emits a perceptible warning, such as e.g. an audio or visible signal, if a vehicle seat is occupied but the corresponding seat belt has not been fastened. The principal requirements to an occupancy sensor employed for the SBR function can be summarized as:
a. The presence of at least a normally seated 5^{th} percentile adult female has to be detected - even at low temperatures.
b. Various light objects that may be placed on the front seat (bag, bottles, laptop, etc.) shall not be recognised as a passenger. Failure to this requirement unduly causes the seat belt warning signal to be emitted because the seat belt is usually not buckled up in such situations.
c. The sensor should be inexpensive and of small size to keep the costs of the seat assembly as low as possible. The small size contributes to low influence of the sensor on comfort and facilitates integration into the seat.

In order to satisfy the requirement of robust detection of light adults, the sensing regions of current state-of-art pressure sensors are located in vicinity of the vertical projection of the H-point and extending more or less symmetrically to both left and right sides of the seat. (For describing the seat or parts thereof, the terms "left" and "right" are used as a person normally seated on the seat would use them.) The switching elements, i.e. the pressure sensing cells of the occupancy sensor, are thus located directly under both the left and right buttocks of a normally seated passenger.

In order to reduce the risk of an improper activation of the SBR warning due to an object placed on the seat, it is known to logically interconnect switching elements on the left side with switching elements on the right side of the seat. Such a seat sensor adapted for the use in a seat belt reminder system is e.g. disclosed in international patent application WO 2005/000637. The described sensor is specifically adapted for discriminating between a symmetrical activation of the sensor e.g. by a person sitting on the seat, and an asymmetric activation e.g. by an object resting on the seat.

### Object of the invention

It is an object of the present invention to reduce costs of manufacturing vehicle seats equipped with an occupant sensor, more specifically a pressure-activatable sensor. This object is achieved by the provision for a seating portion of a vehicle seat as claimed in claim 1.

### General Description of the Invention

A pressure-activatable sensor, such as e.g. a foil-type pressure sensor, is arranged in a seating portion for a vehicle seat; the pressure-activatable sensor includes a sensing region for sensing the presence of an occupant seated on the seating portion. According to an important aspect of the invention, the pressure-activatable sensor is arranged in the seating portion in such a way that the sensing region is located substantially on one side with respect to a virtual plane dividing the seating portion into a left and a right half. The pressure-activatable sensor may include a plurality of individual switching elements. The present invention overcomes the traditional thinking that the sensing regions of occupant sensors should be arranged more or less symmetrically on the left and right sides of the seating portion. The sensing region of the pressure-activatable sensor, which can be considered geometrically as the convex envelope of the switching elements, is located substantially on one side of the seating portion, which means that significantly less than half of the area of the sensing region is located on the other side, e.g. less than 25%, more preferably less than 15%. Still more preferably, the pressure-activatable sensor is arranged in the seating portion in such a way that the sensing region is located entirely on one side with respect to the virtual plane. The latter embodiment bears an important advantage over symmetrically arranged sensors, because many seats have crimping channels or grooves that run along said virtual plane, i.e. along the middle axis of the seating portion.

It will be appreciated that, as a consequence of the suppression of the symmetry requirement, pressure-activatable sensors can be substantially reduced in size. This involves remarkable potential in terms of part price reduction and of simplification of the seat assembly process. Moreover, it has been found that, at least in the case of basic occupant detection, e.g. for the SBR, such asymmetrically placed sensors provide sufficient passenger detection ability and a detection robustness comparable with the detection robustness of sensors with a sensing region extending on both sides of the seating portion.

It should be noted that the above-mentioned virtual plane corresponds essentially to the plane of at least approximate symmetry of the outer contour of the seating portion. Assuming that the seating portion is arranged in a vehicle so that an occupant seated thereon faces the direction of travel, said virtual plane extends along the direction of travel and the vertical, while passing substantially through the middle of the seating portion.

The pressure-activatable sensor can be arranged inside the foam cushion of the seating portion. The pressure-activatable sensor may be foamed into the foam cushion or, alternatively, the seating portion may be provided with a slot therein, formed e.g. by insert molding or cutting. Alternatively, the pressure-activatable sensor can be arranged between the foam cushion and the seat trim of the seating portion. In the context of integration, the pressure-activatable sensor advantageously comprises a single strip that bears the switching element(s). Such a single strip, i.e. an elongated, flat and most preferably flexible piece of sensor material, can be produced very cost-efficiently. Most state-of-the-art pressure-based occupant sensors have a meandrous structure extending over a considerable part of the seat surface, which makes integration of the sensors into the seat difficult. In contrast, a strip-shaped sensor can be inserted into a straight cut or slot provided in the cushion foam, which is very simple and saves costs.

Preferably, the pressure-activatable sensor is arranged in the seating portion in such a way that the sensing region is located underneath an area occupied by a left or a right buttock of a normally seated adult passenger. Those skilled will appreciate that such positioning of the sensor contributes to reliably detecting a passenger. Indeed, the areas occupied by a passenger's buttocks support the most important part of the weight the passenger exerts on the seat. Even more preferably, the pressure-activatable sensor is positioned in such a way that at least one of its switching elements is located in vicinity of an ischial tuberosity of a normally seated adult occupant.

Regarding the layout of a pressure-activatable sensor with a plurality of switching elements, the plurality of switching elements is advantageously composed of at least two disjoint groups of switching elements, which are spatially arranged side by side with respect to a direction parallel to the virtual plane (i.e. the direction of travel, if the seat is arranged in its normal position in a vehicle, so that an occupant thereon faces forward) or which are spatially arranged side by side with respect to a direction orthogonal to the virtual plane. In one embodiment, at least one switching element of one group is operationally connected with a switching element of another group in such a way that a logical AND combination is implemented between these switching elements. The logical AND combination may be implemented through the wiring of the switching elements to a control unit, preferably, however, the logical AND combination is implemented in the electric circuit of the pressure-activatable sensor, e.g. by connecting the two switching elements electrically in series.

In a further embodiment, the switching elements of a same group are operationally connected in such a way that a logical OR combination is implemented between them, and the at least two groups of switching elements are operationally connected in such a way that a logical AND combination is implemented between the at least two groups. With such an implementation, an actuation of switching elements would only be interpreted as "passenger on seat" if said actuation is not limited to one group of switching elements. This reduces the probability of small and light objects being detected as a passenger.

### Brief Description of the Drawings

Further details and advantages of the present invention will be apparent from the following detailed description of not limiting embodiments with reference to the attached drawings, wherein:
- Fig. 1:: is a top schematic view illustrating the position of a pressure sensor according to the technical background of the invention;
- Fig. 2:: is a top schematic view of a seating portion of a vehicle seat according to a first embodiment of the invention;
- Fig. 3:: is a top schematic view of a seating portion of a vehicle seat according to a second embodiment of the invention;
- Fig. 4:: is a top view of a possible embodiment of a pressure sensor for use in the present invention;
- Fig. 5:: is a top view of a variant of the pressure sensor of Fig. 4.

### Description of Preferred Embodiments

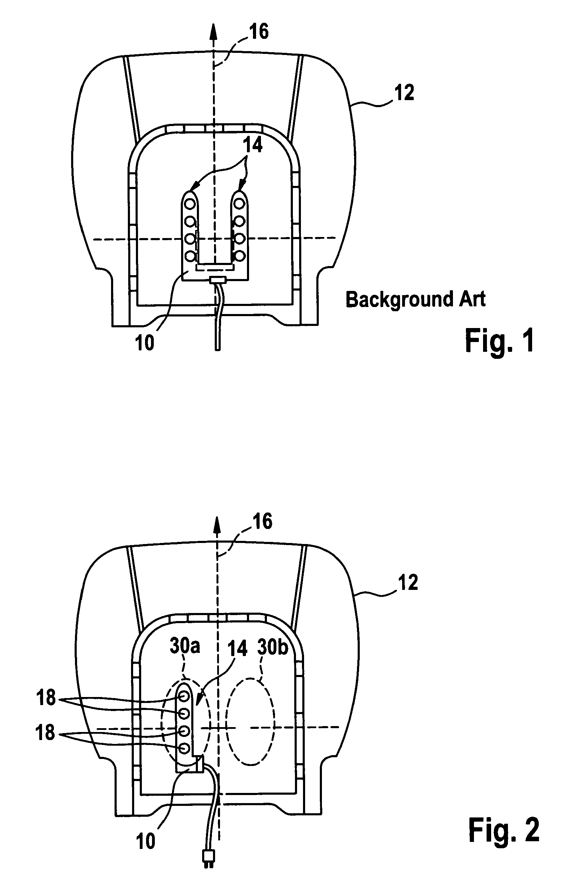

In order to illustrate more clearly the advantages of the present invention, a background art arrangement of a pressure sensor 10 in a seating portion 12 is shown in Fig. 1. As discussed earlier, pressure sensors 10 are commonly arranged in such a way that their sensing regions 14 are positioned more or less symmetrically on the left and right sides of the seating portion 12. The dashed line 16 indicates the middle axis of the seating portion 12, which is also the vertical projection of the virtual plane that divides the seating portion 12 into two halves.

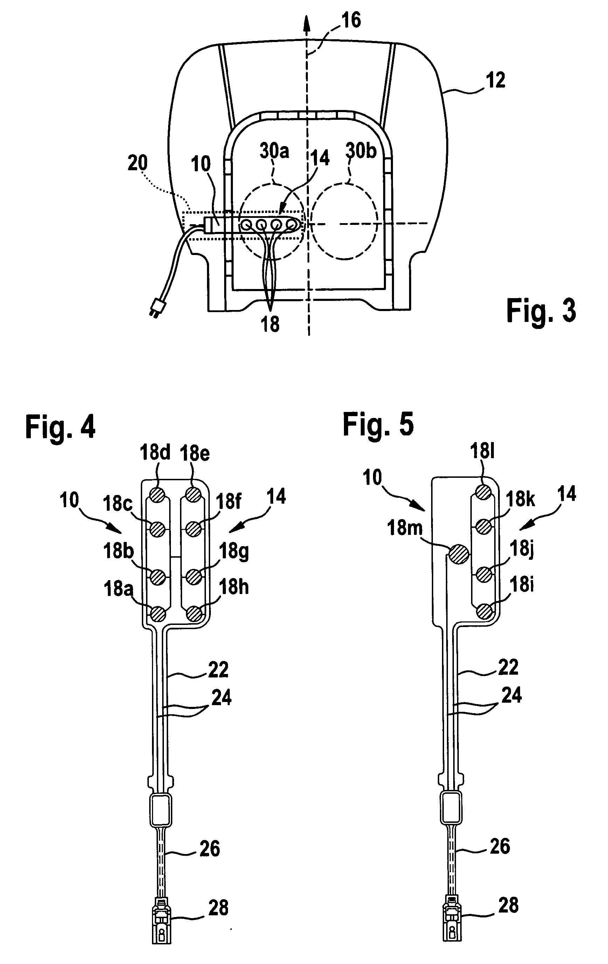

Figs. 2 and 3 illustrate a seating portion 12 of a vehicle seat according to the invention. In contrast to the seating portion 12 shown in Fig. 1, the seating portions 12 of Figs. 2 and 3 have each a single pressure-activatable sensor 10 asymmetrically positioned with respect to the virtual plane 16 dividing the seating portion into a left and a right half. More particularly, the sensing regions 14 are located only on one side of the seating portion 12. The shown pressure-activatable sensors 12 are of foil-type construction, which basically means that they comprise an upper and a lower carrier foil, made e.g. of plastic material, which sandwich a spacer layer. The spacer layer is provided with openings, which define the active zones 18 of the sensor. Upon pressure acting on the sensor 10, the first and second carrier foils are pressed together in the active zones 18, thereby establishing an electrical contact between electrodes arranged in the spacer openings. The active zones with the electrodes arranged therein constitute the switching elements of the sensor 10 and they can either be simple binary switches or, above a certain threshold pressure, have a continuous electrical response function to the amount of pressure acting thereon. As foil-type pressure sensors are known per se, their construction is not discussed in all detail.

Fig. 2 shows a strip-shaped foil-type pressure sensor 10 that has been foamed into the foam cushion, whereas Fig. 3 shows a strip-shaped foil-type pressure sensor 10 that has been inserted into a slot 20 provided in the seat cushion. The slot 20 can be formed according to any process that suits the manufacturer of the foam cushion, e.g. insert molding or cutting. It should be noted that the sensors 10, although shown oriented substantially parallel, respectively perpendicular to the middle axis 16 of the seating portion 12, could also have any orientation, provided that they remain more or less parallel to the upper surface of the seating portion 12, irrespective of whether the sensors 10 are foamed into the foam cushion or inserted into a slot therein. It should further be noted that the pressure sensor 10 is not limited to having the preferred strip-shaped contour shown in the drawings. For example, the contour could be oval, round, cross- shaped, star-shaped, meandrous, T-shaped, H-shaped or U-shaped etc. The positioning of the pressure sensor 10 is achieved in such a way that the sensing region 14 is located underneath the area 30a occupied by a normally seated passenger's left buttock. Indeed, the sensor 10 could also be placed so that the sensing region 14 is located underneath the area occupied by a normally seated passenger's right buttock 30b. Most preferably, at least one of the switching elements 18 is positioned in vicinity of an ischial tuberosity of a normally seated passenger.

More detailed views of preferred embodiments of pressure-activatable sensors are shown in Figs. 4 and 5. The sensors have a sensing region 14, in which the individual switching elements 18 are located, and a tail portion 22, which bears the electric connection lines 24 connecting the switching elements to the cable 26. The cable 26 is connectable to a control unit (not shown) by the plug 28. The switching elements are interconnected in one electric circuit. With respect to Fig. 4, the switching elements 18a, 18b, 18c, and 18d are connected in parallel and form a first group of switching elements. The switching elements 18e, 18f, 18g, and 18h are also connected in parallel and form a second group of switching elements. With respect to Fig. 5, the switching elements 18i, 18j, 18k and 18l are connected in parallel and form a first group of switching elements. The larger switching element 18m forms a second group, which is connected in series with the first group. The parallel connection of switching elements implements a logical OR combination. The first and second group are connected in series, which provides for a logical AND connection. The electric circuit is only closed if at least one switching element of each group is activated. In the case that one or more switching elements of only one group are activated, e.g. due to a handbag placed on the seat, the electric circuit remains open. A control unit connected to the sensor evaluates whether a current passes through the circuit and, if this is the case, outputs a signal indicating that a passenger is present on the seat.

## Claims

1. A seating portion for a vehicle seat, comprising a pressure-activatable sensor arranged in said seating portion, said pressure-activatable sensor including a sensing region for sensing the presence of an occupant seated on said seating portion, **characterized in that** said pressure-activatable sensor is arranged in said seating portion in such a way that said sensing region is located substantially on one side with respect to a virtual plane dividing said seating portion into a left and a right half.

2. The seating portion according to claim 1, wherein said pressure-activatable sensor is arranged in said seating portion in such a way that said sensing region is located entirely on one side with respect to said virtual plane.

3. The seating portion according to claim 1 or 2, wherein said seating portion comprises a foam cushion and a seat trim, said pressure-activatable sensor being arranged inside said foam cushion or between said foam cushion and said seat trim.

4. The seating portion according to any one of claims 1 to 3, wherein said seating portion comprises a foam cushion and wherein said pressure-activatable sensor is foamed into said foam cushion or wherein said foam cushion has a slot disposed therein, which accommodates said pressure-activatable sensor.

5. The seating portion according to any one of claims 1 to 4, wherein said pressure-activatable sensor is arranged in said seating portion in such a way that said sensing region is located underneath an area occupied by a left or a right buttock of a normally seated adult passenger.

6. The seating portion according to any one of claims 1 to 5, wherein said pressure-activatable sensor includes a plurality of switching elements.

7. The seating portion according to claim 6, wherein said pressure-activatable sensor is positioned in such a way that at least one of said switching elements is located in vicinity of an ischial tuberosity of a normally seated adult occupant.

8. The seating portion according to claims 6 or 7, wherein said plurality of switching elements is composed of at least two groups of switching elements, said at least two groups being spatially arranged side by side with respect to a direction parallel to said virtual plane, and wherein at least one switching element of one group is operationally connected with a switching element of another group in such a way that a logical AND combination is implemented between these switching elements.

9. The seating portion according to claims 6 or 7, wherein said plurality of switching elements is composed of at least two groups of switching elements, said at least two groups being spatially arranged side by side with respect to a direction orthogonal to said virtual plane, and wherein at least one switching element of one group is operationally connected with a switching element of another group in such a way that a logical AND combination is implemented between these switching elements.

10. The seating portion according to any one of claims 6 to 9, wherein said plurality of switching elements is composed of at least two groups of switching elements, wherein switching elements of a same group are operationally connected in such a way that a logical OR combination is implemented between the switching elements of a same group, and wherein the at least two groups of switching elements are operationally connected in such a way that a logical AND combination is implemented between the at least two groups.

11. The seating portion according to any one of claims 6 to 10, wherein said pressure-activatable sensor comprises a strip bearing said plurality of switching elements.
